# EUROPÄISCHE PATENTANMELDUNG

(11) **EP 1 879 395 A2**
(43) Veröffentlichungstag der Anmeldung: **16.01.2008**
(21) Anmeldenummer: 07011445.9
(22) Anmeldetag: 12.06.2007
(51) Int. Cl.: H04N 7/24

(54) **Verfahren und Vorrichtung zur Darstellung von Signalen auf einer Anzeigevorrichtung**

(30) Priorität: 21.06.2006 AT 10422006
(71) Anmelder: ROBUST Electronics GmbH, 1220 Wien (AT)
(72) Erfinder: Trzil, Bernhard, 2000 Oberzögersdorf (AT)
(74) Vertreter: Pröll, Jürgen

(57) **Zusammenfassung**

Die vorliegende Erfindung betrifft ein Verfahren und eine Vorrichtung zur Darstellung von mehreren Bewegtbildszenen auf einer Anzeigevorrichtung. Hierzu wird aus einem digitalen Rundfunksignal, welches aus einem Transportstrom mit mindestens zwei Programminhalten besteht, der Transportstrom empfangen. Dieser wird einem Demultiplexer zugeführt wird, welcher aus dem Transportstrom die Programminhalte demultiplext. Ein Programminhalt wird einem Hardwaredecoder zugeführt, welcher den decodierte Programminhalt einer Video-Engine zur Darstellung auf einer Anzeigevorrichtung übergibt.,

## Beschreibung

Die vorliegende Erfindung betrifft ein Verfahren und eine Vorrichtung zur Darstellung von mehreren Bewegtbildszenen auf einer Anzeigevorrichtung gemäß den Merkmalen des Patentanspruchs 1 oder 2 und des Patentanspruchs 9 oder 10.

Heutzutage ist die Übertragung von digitalen Rundfunksignalen Stand der Technik; so hat sich insbesondere europaweit der DVB Standard zur digitalen Übertragung von Rundfunkprogrammen etabliert. Bei der digitalen Rundfunksignalübertragung werden mehrere Rundfunkprogramme in einem so genannten Transportstrom zusammengefasst und übertragen. Hierzu werden die digital vorliegenden Programminhalte der Rundfunkprogramme beispielsweise einer COFDM-Modulation unterzogen und liegen dann verschachtelt im Transportstrom vor. Um die Programminhalte zu übertragen und um insbesondere die zu übertragende Datenmenge zu reduzieren hat sich für die Bewegtbildübertragung der MPEG-Video-Standard durchgesetzt, aktuell mit Layer 2; das zu den Bewegtbilddaten zugehörige Audiosignal, bzw. die Audiosignale, werden ebenfalls in digitalisierter und komprimierter Form im Transportstrom übertragen.

Empfängerseitig wird der Transportstream empfangen, einem Demultiplex-Vorgang und einem Decodier-Vorgang unterzogen, wodurch dann das jeweilige Rundfunkprogramm gewonnen wird, welches dann auf einer Anzeigevorrichtung eines Fernsehempfangsgerätes dargestellt wird.

Aus EP 0 964 576 A1 ist ein Verfahren und eine Vorrichtung zum Empfang von digitalen Videosignalen bekannt. Dieses Verfahren dient zum Empfang eines ersten Videosignals, das ein Hauptbild darstellt, und eines zweiten Videosignals, das ein Bild-im-Bild darstellt, wobei das zweite Videosignal ein komprimiertes digitales Videosignal ist, wie ein MPEG-Elementarstrom, das autonom codierte Bilder sowie prädiktiv codierte Bilder enthält. Verfahrensgemäß werden die Daten selektiert und decodiert und nur die autonom codierten Bilder zur Wiedergabe als Bild-im-Bild verwendet.

Aus EP 0 700 561 A1 ist ein Bildanzeigesystem und ein Mehrfensterbildanzeigeverfahren offenbart. Hierbei sind Empfangsmittel zum Empfang von Eingangsvideosignalen vorhanden. Es ist außerdem ein Speicher mit einer Anzahl von Speicherzellen zum Speichern von Pixelinformationen vorgesehen. Im Weiteren sind Auslesemittel vorhanden, welche die Speicherstellen des eingangs genannten Speichers auslesen und zum Bilden eines Ausgangsvideosignals verwenden.

Aus EP 0 534 139 A2 ist ein Verfahren zur Anzeige einer Mehrzahl an Videofenstern auf einem Anzeigebildschirm bekannt. Hierbei wird jedes Videofenster aus einem entsprechenden Strom an Bilddaten erstellt. Das Verfahren umfasst folgende Schritte: (a) Teilung jedes genannten Stroms von Bilddaten in Kodierungsintervalle, wobei jedes der genannten Kodierungsintervalle Bilddaten für einen entsprechenden Teil eines der genannten Fenster besitzt; (b) Komprimierung jedes der genannten Kodierungsintervalle von Bilddaten, um eine erste Gruppe komprimierter Daten für jedes der genannten Kodierungsintervalle zu erstellen; (c) Mischen aller komprimierten Daten aus der genannten ersten Gruppe, um mindestens eine zweite Gruppe komprimierter Daten für jeden genannten entsprechenden Teil, der auf dem genannten Anzeigebildschirm dargestellt werden soll, zu erstellen; und (d) Dekomprimierung jeder zweiten Datengruppe, um Pixeldaten für jeden genannten entsprechenden Teil, der auf dem genannten Anzeigebildschirm dargestellt werden soll, zu erstellen.

In DE 197 52 507 A1 wird eine Vorrichtung zur Erzeugung eines digitalen Videobildes vorgeschlagen. Dabei besteht das Videobild aus einem Hauptbild und einem Nebenbild. Das Nebenbild dient zur Information über den Status der Vorrichtung oder auch zur Bedienungsführung. Die Daten des Bildes werden digital angeliefert. Im Bitstrom für das Hauptbild sind noch Daten für das Teilbild enthalten. Das Teilbild kann ebenfalls zusammen mit dem Hauptbild dargestellt werden und Informationen wie z. B. Untertitel zum Hauptbild geben. Decodiervorrichtungen für die Hauptbild-Daten und die Teilbild-Daten sind vorgesehen. Ebenfalls ist eine Multiplexeinrichtung für die zeitrichtige Ausgabe der decodierten Daten und somit der gemeinsamen Darstellung von Hauptbild und Teilbild vorgesehen. Die Vorrichtung weist eine Speichereinrichtung auf, in der Daten für die Nebenbilder in codierter Form abgespeichert werden. Die codierten Daten eines Nebenbildes werden auf einen erhaltenen Befehl hin in die Decodiereinheit für die Teilbild-Daten geladen. Die Decodierung der Daten für das Teilbild wird gestoppt und stattdessen findet die Decodierung der Daten für das Nebenbild statt.

Aus US 5 351 129 B1 ist ein Video-Coder und ein Video-Decoder für das selektive Empfangen von Videosignalen bekannt. Es ist eine simultane Anzeige in einem vorgewählten Muster von Videofenster auf einer Videodarstellungvorrichtung vorgesehen. Außerdem ist ein Decoder- und Bildschirmkonverter für das Empfangen, die Decodierung und das Umwandeln eines kodierten, multiplexen Zeitmultiplexvideosignals für vorgewählte, simultane Anzeige der mehrfachen Videobilder im vorgewählten Muster der mehrfachen Videofenster auf der Videodarstellungvorrichtung vorhanden.

Nachteilig bei den aktuell verfügbaren Geräten zum Empfang und zur Darstellung digital übertragener Rundfunksignale ist, dass für jede Darstellung eines Bewegtbildes auf der Anzeigevorrichtung und für jedes darzustellende Programm ein eigener Decoder zur Decodierung der codierten digitalen Rundfunksignale benötigt wird.

Aufgabe der Erfindung ist es, ein Verfahren und eine Vorrichtung aufzuzeigen, welche auf erstaunlich einfache Art und Weise und mit bereits in jedem Empfänger für digitale Rundfunksignale vorhandenen Mitteln die Decodierung eines empfangenen digitalen Transportstroms ermöglicht und zugleich mit den eingangs genannten Mitteln die Darstellung von mehreren Bewegtbildern mit unterschiedlicher Qualität zur Darstellung auf einer Anzeigevorrichtung ermöglicht.

Diese Aufgabe wird anhand der Merkmale der Ansprüche 1 oder 2 und 9 oder 10 gelöst.

Vorteilhafte Ausgestaltungen der Erfindung ergeben sich anhand der abhängigen Ansprüche, der weiteren Beschreibung sowie der beigefügten Figuren.

Ein typischerweise empfangener Transportstrom weist ineinander geschachtelt mehrere Programminhalte auf, welche digital codiert vorliegen. Um die Programminhalte verarbeiten und darstellen zu können, wird zunächst der Transportstrom von einem digitalen Rundfunksignalempfänger empfangen. Anschließend wird das empfangene Signal einer Singalaufbereitungseinheit zugeführt, ehe dann mittels eines Demultiplexers aus dem Transportstrom die einzelnen Programminhalte, welche in digitaler Form vorliegen, gewonnen werden. Aus den auf diese Weise gewonnenen Programminhalten, im weiteren mit Datenstreams bezeichnet, wird dann ein Programminhalt mittels eines Decodierer in auf einer Anzeigevorrichtung darstellbare Signale umgewandelt und einer Video-Engine zugeführt, welche dann diesen Programminhalt auf einer Anzeigeeinheit darstellt.
Die Programminhalte liegen, wie ausgeführt, in digital codierter Form, insbesondere MPEG-codiert, vor.

Beim MPEG-Codierungsverfahren werden die einzelnen übertragenen Bilder eines Datenstreams unterschiedlich stark komprimiert und zu unterschiedlichen Zwecken genutzt. Die Bilder sind in drei Arten aufgeteilt, den I-Frames, den P-Frames und den B-Frames. Die I-Frames werden unabhängig von anderen Bildern komprimiert und sind an definierten Positionen im Datenstream der digitalen Programminhalte vorhanden. Auf diesen I-Frames basieren die nachfolgenden digital übertragenen Bilder, bei welchen nur die Veränderung der Bildinhalte zum vorherigen Bildinhalt und/oder nachfolgenden Bildinhalt übertragen. Daher benötigen die I-Frames relativ gesehen den größten Speicherplatz im Datenstream. Diese I-Frames sind aber notwendig, um die von diesen Bildern abgeleiteten Bewegungsveränderungen in den nachfolgenden und/oder vorausgehenden Bildern darstellen zu können. Die weiteren Bilder im Datenstream werden in Abhängigkeit von den anderen Bildern in dem Videostrom kodiert und benötigen dadurch weniger Speicherplatz. Neben den I-Frames sind im Datenstream P-Frames und B-Frames enthalten. Bei den P-Frames handelt es sich um Bildinformationen, welche zur Darstellung Informationen von vorausgegangenen I-Frames oder P-Frames benötigen. Diese P-Frames weisen eine weit höhere Kompressionsrate als die I-Frames auf. Schließlich sind im Datenstream dann noch B-Frames vorhanden. Diese B-Frames sind abhängig von vorausgegangenen und nachfolgenden I-Frames oder P-Frames; diese Bilder weisen die höchste Kompressionsrate auf. Der Datenstream besteht aus einem I-Frame und mehreren nachfolgenden P-Frames und B-Frames. Diese verschiedenen Frames sind typischerweise zyklisch als so genannte Group of Pictures gefasst und reicht von einem I-Frame zum nächsten, wobei diese typischerweise eine Länge von einer halben Sekunde haben. Im Header zur Group of Pictures sind weitere Daten vorhanden, wobei es sich unter anderem um den der Video Time Code sowie die Group of Pictures Parameter handelt. Diese Daten spielen aber bei der Erfindung der Anmelderin nur eine untergeordnete Rolle und können daher außer betracht bleiben. Eine Group Of Pictures beinhaltet Informationen über die Kodierreihenfolge der Bildtypen. Das erste kodierte Bild in einer Group of Pictures ist immer ein I-Frame, wobei die Kodierreihenfolge beispielsweise wie folgt aussieht:

I-Frame, B-Frame, B-Frame, P-Frame, B-Frame, B-Frame, P-Frame, B-Frame, B-Frame, P-Frame, B-Frame, B-Frame, P-Frame.

Diese Bildfolge stellt zugleich eine Group of Pictures dar.

Um einen Datenstream zu decodieren kommt ein Decoder zum Einsatz. Dieser ist im erfindungsgemäßen Empfänger bzw. der Darstellungsvorrichtung enthalten, als eigenständige Einheit. In vorteilhafter Weise der Erfindung weist der erfindungsgemäße Empfänger bzw. die Darstellungsvorrichtung einen Hardwaredecoder auf, welchem von der Steuereinheit des Empfängers bzw. der Darstellungsvorrichtung der zur Decodierung vorgesehene Programminhalt - Datenstream - übergeben wird. Der Hardwaredecoder triggert auf den ersten vorliegenden I-Frame des entsprechenden Programminhalts - Datenstreams - getriggert und decodiert diesen Datenstream.

Der Datenstream wird, wie bereits aufgezeigt, durch einen Demultiplexer aus dem Transportstrom gewonnen. Hierzu ist vorzugsweise ein Demultiplexer vorgesehen, welcher aus dem Transportstream die in diesem verschachtelt angeordneten Datenströme der jeweiligen Programminhalte - Datenstreams - gewinnt.
Der Demultiplexer demultiplext den Transportstrom und legt die degemultiplexten Daten, die Datenstreams - in einem Zwischenspeicher ab. Aus dem Zwischenspeicher entnimmt dann der Hardwaredecoder, wobei er nach den Startpunkten der I-Frames sucht, einen Datenstream, eben die Group of Pictures, d.h. die I-Frames und die zugeordneten P-Frames und B-Frames, decodiert diese und übergibt diese Daten der Video-Engine, welche die decodierten Biidfolgen als Bewegtbilder auf der Anzeigevorrichtung darstellt.

In einer vorteilhaftern Ausführung der Erfindung werden vom Demultiplexer im Zwischenspeicher alle demultiplexten Daten abgelegt, so auch die Datenstreams der weiteren im Transportstream vorhandenen Programminhalte. Es werden folglich im Zwischenspeicher alle Daten des Transportstreams in demultigeplexter Form abgelegt.

Da es sich bei dem Zwischenspeicher aber um einen physikalischen Speicher endlicher Größe handelt, werden die dort gespeicherten Daten zyklisch wider gelöscht, bzw. durch neue Daten überschrieben. Da die Datenmenge der aus dem Transportstrom gewonnen Daten, eben die Group of Pictures in Ihrer Speicherdimension bereits vorab bekannt sind, und sich diese Datenmenge über die Zeit eigentlich nicht verändert, werden die Group of Pictures eines Datenstreams, somit eines Programminhalts, von den nachfolgenden empfangenen Daten desselben Datenstreams überschrieben.
Die vom Demultiplexer aus dem Transportstream gewonnenen Daten - die Datenstreams - werden daher stets an der selben Speicherstelle im Zwischenspeicher geschrieben und eine Group of Pictures eines Datenstreams überschreibt im Zwischenspeicher somit stets die vorausgehend empfangene Group of Pictures des vorhergehend empfangenen Datenstreams. In vorzugsweiser Ausgestaltung ist vorgesehen, dass der Zwischenspeicher derart dimensioniert ist, dass eine Group of Pictures jeweils erst beim zweiten Empfangszyklus überschrieben wird.

Soll nunmehr ein Programm aus dem Transportstrom auf der Anzeigeeinheit von der Video-Engine dargestellt werden, so wird mit der Decodierung an der entsprechenden Stelle im Zwischenspeicher begonnen. Die Steuereinheit der Anzeigevorrichtung übergibt dem Hardwaredecoder dann nur noch die Startadresse im Zwischenspeicher und der Hardwaredecoder beginnt dann mit der Decodierung dieser Daten und übergibt die decodierten Daten der Video-Engine.

Der Zwischenspeicher ist derart ausgelegt, dass mindestens zwei Decodiervorgänge, d. h. zwei komplette Videodatenströme von unterschiedlichen Programmen aus dem Transportstrom, eingespeichert werden können.

Da die Steuereinheit zumeist nicht voll mit Ihren Aufgaben ausgelastet ist und Rechenkapazität zur Verfügung stellen kann, ist vorgesehen, dass die Steuereinheit zur Decodierung von I-Frames herangezogen wird. Die Steuereinheit durchsucht den Zwischenspeicher nach dem nächsten I-Frame, der nicht vom Hardwaredecoder decodiert wird. Vorzugsweise ist der Speicherbereichsbeginn bekannt, an welcher Stelle im Zwischenspeicher der nächste I-Frame mit dem vom Demultiplexer dort abgelegten Daten mit den Group of Pictures abgelegt ist. Da es sich beim I-Frame vorzugsweise um ein Vollbild, zumeist im JPEG-Format, handelt, kann die Steuereinheit, auf welcher ein Decodieralgorithmus implementiert ist, diesen I-Frame decodieren. Das decodierte Bild des I-Frames wird dann der Video-Engine übergeben, zur zusätzlichen Darstellung, neben dem vom Hardwaredecoder übergegebenen Bilddaten aus dem anderen Datenstream.

Da zwischen der Übertragung einer Group of Pictures etwa eine halbe Sekunde vergeht, kann die Steuereinheit innerhalb dieser Zeit den I-Frame decodieren und übergibt diese decodierten Daten der Video-Engine, welche dann dieses Bilder zusätzlich zum Vollbild, welches aus den Daten erstellt wird, welche vom Hardwaredecoder geliefert werden, darstellen kann.
Die Steuereinheit dient somit als Softwaredecodierer für I-Frames.

Der Hardwaredecoder stellt nunmehr seine Daten der Video-Engine zur Verfügung. Die Video-Engine stellt diese vom Hardwaredecoder gelieferten Daten auf der Anzeigevorrichtung dar. Zugleich stellt nunmehr die Steuereinheit die von ihr decodierten I-Frames, zumindest einen decodierten I-Frame, ebenfalls der Video-Engine zur Verfügung. Die Video-Engine stellt dann die vom Hardwaredecoder gelieferte Bildinformationen, sowie die von der Steuereinheit bereitgestellten decodierten I-Frames zur Verfügung und stellt das vom Hardwaredecoder decodierte Signal als hochauflösendes Bild auf der gesamten Bildschirmfläche dar, zugleich werden die decodierten I-Frames, welche durch die Steuereinheit decodiert wurden, in einem Nebenbild dargestellt. Je nach Auslastung und Möglichkeit der Steuereinheit kann mindestens ein Nebenbild auf diese Weise aus mindestens einem Datenstrom gewonnen werden. Die Anzahl der auf diese Weise darstellbaren Nebenbilder ist auf die im Datenstrom vorhandenen I-Frames begrenzt.

Im Weiteren werden nunmehr das Verfahren und die Vorrichtung anhand von Figuren anhand eines konkreten Ausführungsbeispiels näher erläutert. Die weitere Beschreibung anhand des Ausführungsbeispiels stellt keine Limitierung der Anmeldung auf diese Ausführungsform dar, sondern dient lediglich zur besseren Verständlichkeit.

Es zeigt:
- FIG. 1: einen Ausschnitt aus einem Transportstrom eines digital übertragenen Rundfunksignals;
- FIG. 2: einen schematischen Aufbau eines MPEG-Datensignals;
- FIG. 3: einen schematische Aufbau einer erfindungsgemäßen Darstellungseinheit,
- FIG. 4: einen weiteren schematische Aufbau einer erfindungsgemäßen Darstellungseinheit,
- FIG. 5: eine schematische Belegung eines Speichers der erfindungsgemäßen Darstellungseinheit.

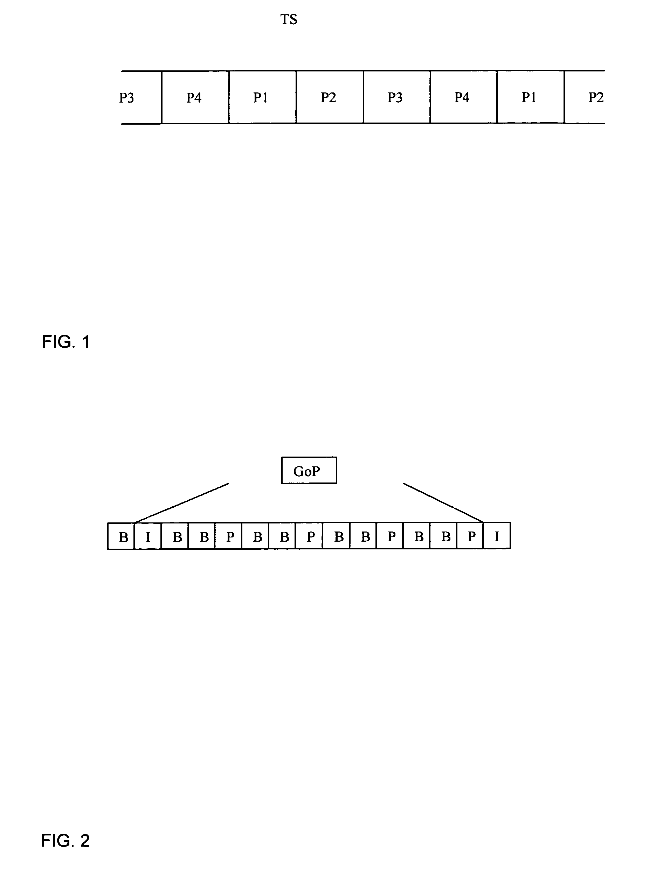

In FIG. 1 ist ein Ausschnitt aus einem digital übertragenen Rundfunksignal dargestellt. Es ist der Transportstrom TS dargestellt, der beispielhaft vier Programminhalte bzw. Programme P1, P2, P3, P4 enthält. Diese Programminhalte P1, P2, P3, P4, auch als Datenstreams bezeichnet, werden quasi parallel übertragen, diese Daten liegen verschachtelt und gemultiplext im Transportstrom TS vor. Zur besseren Verdeutlichung ist dies in FIG. 1 symbolisch dargestellt. Im Transportstrom liegen die Datenstreams P1, P2, P3, P4 in gemultiplexter Form dar, wobei sich innerhalb eines Datenrahmens des Transportstroms TS jeweils die für einen vorgegebenen Zeitraum aktuellen Datenstreams zu den Programmen P1, P2, P3, P4 befinden.

In FIG. 2 ist beispielhaft der Aufbau eines MPEG-Signals mit den verschiedenen Frames dargestellt. Das wesentliche bei der Übertragung von digitalen Rundfunksignalen nach dem DVB-Standard ist die Datenreduktion der zu übertragenden Bilder. Die Encodierung der Bilddaten und die Datenreduktion erfolgt in drei Stufen und berücksichtigt dabei, dass die aufeinander folgenden Phasenbilder eines Films ähnliche Inhalte haben. Am wenigsten komprimiert sind so genannte I-Frames I. Hier erfolgt eine verlustbehaftete Datenkompression innerhalb eines Filmbildes. Die I-Frames I ähneln JPEG-komprimierten Bildern. Anschließend, in der nächsten Stufe, werden nur Veränderungen gegenüber dem letzten I-Frame I gespeichert, die es ermöglichen, eines der folgenden Bilder vorherzusagen. Das ist dann ein P-Frame P. Die letzte Stufe der Kompression erzeugt B-Frames B. Damit werden die Lücken zwischen den I-Frames I und den P-Frames P oder zwischen zwei P-Frames P aufgefüllt. Um ein B-Frame B zur Darstellung zu rekonstruieren, benötigt man neben übertragenen Differenzinformationen auch den letzten P-Frame P oder I-Frame I sowie den erste folgenden P-Frame P oder I-Frame I. Es ergibt sich dann die in FIG. 2 dargestellt eine Bilderfolge.
Den sich ständig wiederholten Bereich der Frames IBBPBBPBBPBB bezeichnet man als Group Of Pictures GoP. Diese Reihenfolge der Frames wird aus jedem der Datenstreams P1, P2, P3, P4 gewonnen.

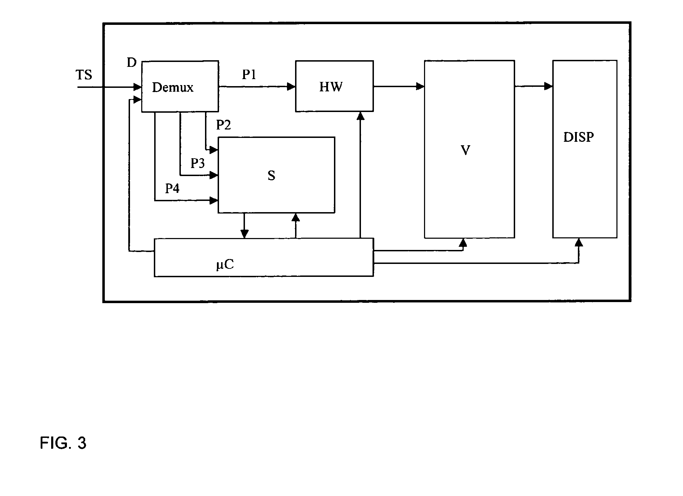

In Figur 3 ist der schematische Aufbau einer erfindungsgemäßen Darstellungseinheit D, welcher der Transportstrom TS gemäß FIG. 1, der von einem nicht dargestellten Empfänger empfangen wurde, zugeführt wird. Der Transportstrom TS dient als Eingangssignal. Der Transportstrom TS wird einem Demultiplexer Demux zugeleitet. Der Demultiplexer Demux stellt die Programmeinhalte - Datenstreams P1, P2, P3, P4 in demultiplexter Form zur Verfügung. Hierbei wird vom Demultiplexer Demux jeder Datenstream P1, P2, P3, P4 aus dem Transportstrom TS gewonnen. In der Ausführungsform der Erfindung gemäß FIG. 3 wird von der Mikrocomputereinheit µC der Demultiplexer Demux derart angesteuert, dass beispielhaft der Datenstream P1 direkt einem Hardwaredecoder HW zugeführt wird, der dann die ihm übergebenen Daten, welche als MPEG-Signal in der Form wie in FIG. 2 dargestellt vorliegt, decodiert und diese der Video-Engine V übergibt. Diese stellt dann die übergebenen Bilder auf der Anzeigevorrichtung Disp dar.
Derjenige Ausgang des Demultiplexers Demux, der von der Mirkocomputereinheit µC ausgewählt wurde, um als Vollbild von der Video-Engine dargestellt zu werden, in FIG. 3 beispielsweise der Datenstream P1, wird dem Hardwaredecoder HW direkt zugeleitet. In Abhängigkeit der Eingabe eines Nutzers kann aber jeder der Datenstreams P1 bis P4 direkt dem Hardwaredocoder HW zugeführt werden. Der Hardwaredecoder HW decodiert den Datenstream P1 des ihm übergebenen Programms, im vorliegenden Fall des Programms P1, und leitet die decodierten Daten an die Video-Engine V zur Darstellung weiter.

Der Demultiplexer Demux weist jedoch weitere Ausgänge auf, welche einem Speicher S zugeleitet sind. Im Speicher S werden die Datenstreams P2, P3, P4, welche an den weiteren Ausgängen des Demultiplexers Demux vorliegen und die Datenströme der Programme P2, P3, P4 repräsentieren, gespeichert.
Der Speicher S ist derart ausgelegt, dass dort die vom Demultiplexer Demux bereitgestellten Datenstrams P2, P3, P4 abgelegt werden können. In vorzugsweiser Ausführung handelt es sich bei dem Speicher S um einen FIFO Speicher, bei welchem, wenn der Speicher S gefüllt ist, diejenigen Daten gelöscht werden, die am Längsten im Speicher S vorhanden sind.
Die Mikrocomputereinheit µC durchsucht nunmehr den Speicher S und entnimmt diesem jeweils aus den demultiplexten Datenströmen P2, P3, P4 gewonnenen I-Frames I, mindestens einen I-Frame I eines der Datenstreams P2, P3, P4. Diese I-Frames I bzw. den I-Frame I, liest die Mikrocomputereinheit µC aus, und decodiert diese Daten softwaremäßig und leitet diese an die Video-Engine V weiter. Je nach Eigenschaft und Leistungsfähigkeit der Mikrocomputereinheit µC ist es möglich, mindestens einen der Datenströme P2 bis P4 nach den I-Frames auszuwerten und darzustellen. Es besteht aber auch die Möglichkeit, wenn der Mikrocomputereinheit µC ausreichend dimensioniert ist, und genügend Kapazität zur Decodierung vorhanden ist, auch einen kompletten Datenstream P2 bis P4 zu decodieren und diese Daten der Video-Engine V zur zusätzlichen Darstellung zu übergeben. In vorzugsweiser Ausführung werden jedoch nur die I-Frames derart verarbeitet.
Die Video-Engine V stellt die vom Hardwaredecoder HW gelieferten Daten aus dem Datenstream P1 auf der Anzeigevorrichtung Disp dar. Zugleich stellt die Video-Engine V den mindestens einen von der Mikrocomputereinheit µC decodierten I-Frame eines der Datenstrome P2, P3, P4 dar, vorzugsweise als Nebenbild oder als Bild-im-Bild.

Erfindungsgemäß können somit ein Datenstream P1 in hoher Qualität sowie mindestens einem Nebenbildern die 1-Frames der weiteren Datenstreams P2, P3, P4 des Transportstroms dargestellt werden. Auf diese überraschend einfache Weise ist es möglich, durch eine Implementierung einer Decodierroutine auf dem Mikrocomputer µC eine zusätzliche Darstellung, wenn auch in niedriger Qualität als das Vollbild, darzustellen, ohne zusätzlichen Einsatz weiterer Komponenten.

Bei der Anzeigevorrichtung Disp handelt es sich vorzugsweise um ein Plasmadisplay, ein LCD-Display, eine Projektionseinheit oder eine andere Einheit zur Darstellung von Bewegtbildszenen.

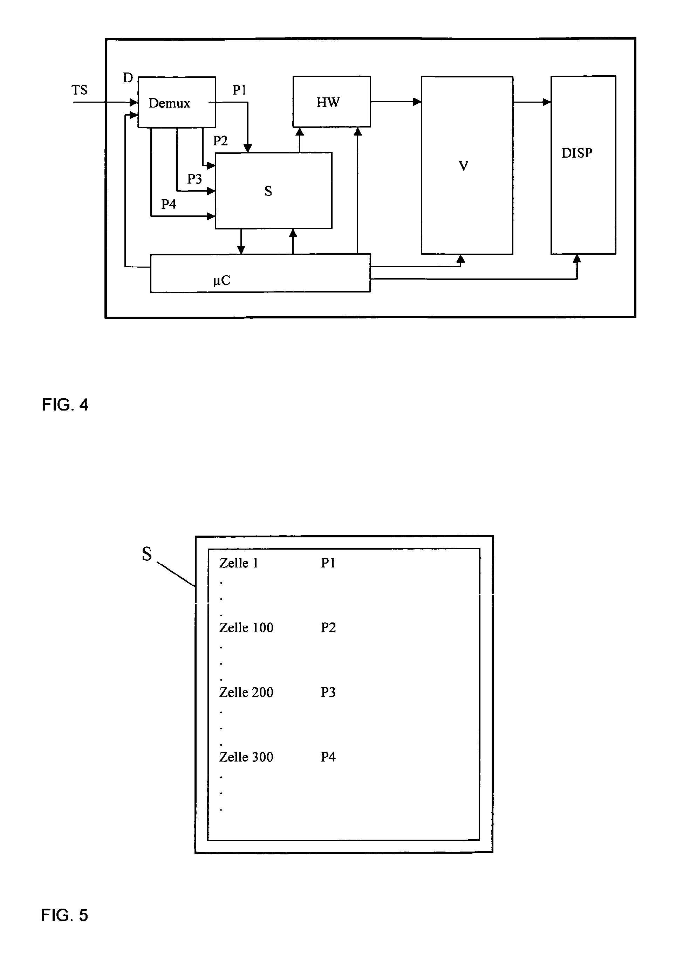

FIG 4 zeigt eine weitere Ausführungsform der Erfindung. Hierbei ist der Demultiplexer Demux nicht mehr direkt mit dem Hardwaredecoder HW verbunden, sondern die Datenstreams P1, P2, P3, P4, welche der Demultiplexer Demux aus dem Transportstream TS gewinnt, werden alle in den Speicher S geschrieben. Die Mikrocomputereinheit µC weist dann den Hardwaredecoder HW an, diejenigen Daten eines Datenstreams P1, P2, P3, P4 aus dem Speicher S zu entnehmen und diese zu decodieren, welche von der Video-Engine V dargestellt werden sollen.

In FIG. 5 ist symbolisch die Speicherbelegung des Speichers S dargestellt. Da es sich bei den Datenmengen, welche jedem Datenstream P1, P2, P3, P4 zugehören um bekannte Datenmengen handelt, ist der Beginn (Startadresse) der Daten eines jeden Datenstreams P1, P2, P3, P4 bekannt. Der Demultiplexer Demux ist derart eingestellt, dass er die Datenströme P1 bis P4 jeweils beginnend mit einer vordefinierten Speicherstelle im Speicher ablegt.

Die Mikrocomputereinheit µC übergibt dem Hardwaredecoder HW nunmehr nur noch die Speicheradresse des Speicher S, ab welchem dieser die zu decodierenden Daten entnimmt. Je nachdem, welcher der Datenstreams P1 bis P4 der Video-Engine V zur Darstellung auf der Anzeigeeinheit Disp zugeführt werden soll, gibt die Mikrocomputereinheit µC die Startadresse im Speicher S an, eben die Adresse an welcher der Demultiplexer Demux die entsprechenden Datenstreams P1 bis P4 gespeichert hat. Der Hardwaredecoder HW beginnt von hier ab Daten auszulesen und zu decodieren.

Die Mikrocomputereinheit µC ihrerseits springt nunmehr an diejenigen Speicherzellen im Speicher S, an welchem nicht vom Hardwaredecoder ausgewerteten Daten liegen, durchsucht diese nach I-Frames I und decodiert die I-Frames I bzw. gegebenenfalls die nachfolgenden dort abgelegten Bilddaten. Diese Daten werden von einem Softwaredecoder, welcher als Unterprogramm auf der Mikrocomputereinheit µC implementiert ist, ausgelesen und decodiert und ebenfalls der Video-Engine V zugeführt, welche dann ihrerseits diese Bilddaten neben dem Vollbild auf der Anzeigevorrichtung Disp darstellt, vorzugsweise als Bild-im-Bild-Darstellung oder als Nebenbild.

Die Darstellung der von der Mikrocomputereinheit µC bereitgestellten Daten kann auch über einen Zusatzbaustein in Form von einer OSD Einblendung erfolgen.

## Patentansprüche

1. Verfahren zur Darstellung von mehreren Bewegtbildszenen auf einer Anzeigevorrichtung, wobei aus einem digitalen Rundfunksignal, welches aus einem Transportstrom (TS) mit mindestens zwei Programminhalten (P1, P2, P3, P4) besteht, der Transportstrom (TS) empfangen und einem Demultiplexer (Demux) zugeführt wird, wobei der Transportstrom (TS) vom Demultiplexer (Demux) in die mindestens zwei Programminhalte (P1, P2, P3, P4) demultiplext wird, wobei die mindestens zwei Programminhalte (P1, P2, P3, P4) codierte Bilder (I, P, B) enthalten und ein ausgewählter Programminhalt (P1) einem Hardwaredecoder (HW) zugeführt wird, welcher den ausgewählten Programminhalt (P1) decodiert, der ausgewählte decodierte Programminhalt (P1) wird einer Video-Engine (V) zur Darstellung auf einer Anzeigevorrichtung (Disp) übergeben,
**dadurch gekennzeichnet, dass**
die weiteren Programminhalte (P2, P3, P4) vom Demultiplexer (Demux) in einen Speicher (S) gespeichert werden, der Speicher (S) von einer Mikrocomputereinheit (µC) nach codierte Bildern (I) durchsucht wird und diese codierten Bildern (I) von der Mikrocomputereinheit (µC) decodiert und der Video-Engine (V) zur Darstellung übergeben werden.

2. Verfahren zur Darstellung von mehreren Bewegtbildszenen auf einer Anzeigevorrichtung, wobei aus einem digitalen Rundfunksignal, welches aus einem Transportstrom (TS) mit mindestens zwei Programminhalten (P1, P2, P3, P4) besteht, der Transportstrom (TS) empfangen und einem Demultiplexer (Demux) zugeführt wird, wobei der Transportstrom (TS) vom Demultiplexer (Demux) in die mindestens zwei Programminhalte (P1, P2, P3, P4) demultiplext wird, wobei die mindestens zwei Programminhalte (P1, P2, P3, P4) codierte Bilder (I, P, B) enthalten,
**dadurch gekennzeichnet, dass**
die degemultiplexten Programminhalte (P1, P2, P3, P4) vom Demultiplexer (Demux) in einen Speicher (S) gespeichert werden, eine Mikrocomputereinheit (µC) einen ausgewählten Programminhalt (P1) einem Hardwaredecoder (HW) zuleitet, von welchem diese Daten decodiert und einer Video-Engine (V) zur Darstellung auf einer Anzeigevorrichtung übergeben werden, der Speicher (S) von einer Mikrocomputereinheit (µC) nach codierte Bildern (I), welche nicht dem ausgewählten Programminhalt (P1) zugehören, durchsucht wird und diese codierte Bildern (I) von der Mikrocomputereinheit (µC) decodiert und der Video-Engine (V) zur Darstellung übergeben werden.

3. Verfahren nach Anspruch 1 oder 2,
**dadurch gekennzeichnet, dass**
die codierte Bilder (I, P, B) unterschiedliche Kompressionsraten aufweisen.

4. Verfahren nach Anspruch nach einem oder mehreren der vorhergehenden Ansprüche,
**dadurch gekennzeichnet, dass**
die codierte Bilder (I, P, B) zu Gruppen (GoP) zusammengefasst sind.

5. Verfahren nach einem oder mehreren der vorhergehenden Ansprüche,
**dadurch gekennzeichnet, dass**
die codierte Bilder (I, P, B) nach dem MPEG-Codierungsverfahren codiert werden und dass es sich um I-Frames (I), P-Frames (P) und B-Frames (B) handelt.

6. Verfahren nach einem oder mehreren der vorhergehenden Ansprüche,
**dadurch gekennzeichnet, dass**
die bestimmten codierten Bilder (I) I-Frames sind und diese von der Mikrocomputereinheit (µC) mittels eines auf der Mikrocomputereinheit (µC) implementierten Softwareroutine decodiert werden.

7. Verfahren nach einem oder mehreren der vorhergehenden Ansprüche,
**dadurch gekennzeichnet, dass**
die bestimmten codierten Bilder (I) von der Video-Engine (V) in einem Nebenbild oder als Bild-im-Bild auf der Anzeigevorrichtung (Disp) dargestellt werden.

8. Verfahren nach einem oder mehreren der vorhergehenden Ansprüche 2 bis 7,
**dadurch gekennzeichnet, dass**
dem Hardwaredecoder (HW) von der Mikrocomputereinheit (µC) die Startadresse im Speicher (S) übergeben wird, ab welcher die zu decodierenden Programminhalte (P1) liegen und die an dieser Startadresse im Speicher (S) liegenden Programminhalte (P1) vom Hardwaredecoder (HW) decodiert werden.

9. Darstellungsvorrichtung (D) zur Darstellung von mehreren Bewegtbildszenen auf einer Anzeigevorrichtung (Disp), bestehend aus einer Mikrocomputereinheit (µC), einem Speicher (S), einer Video-Engine (V) und einem Hardwaredecoder (HW), der Darstellungsvorrichtung ein Transportstrom (TS) als Eingangssignal in Form eines digitalen Rundfunkempfangssignals dient, wobei der Transportstrom (TS) aus mindestens zwei Programminhalten (P1, P2, P3, P4) besteht, der Demultiplexer (Demux) den Transportstrom (TS) in die in diesem enthaltenden mindestens zwei Programminhalte (P1, P2, P3, P4) demultiplext, wobei die Programminhalte (P1, P2, P3, P4) codierte Bilder (I, P, B) enthalten, der Hardwaredecoder (HW) einen ausgewählten Programminhalt (P1) decodiert, und der Video-Engine (V) zur Darstellung auf der Anzeigevorrichtung (Disp) übergibt,
**dadurch gekennzeichnet, dass**
der Demultiplexer (Demux) die weiteren Programminhalte (P2, P3, P4) in den Speicher (S) speichert, die Mikrocomputereinheit (µC) den Speicher (S) nach codierten Bildern (1) durchsucht und diese codierten Bilder (I) decodiert und der Video-Engine (V) zur Darstellung übergibt.

10. Darstellungsvorrichtung (D) zur Darstellung von mehreren Bewegtbildszenen auf einer Anzeigevorrichtung (Disp), bestehend aus einer Mikrocomputereinheit (µC), einem Speicher (S), einer Video-Engine (V) und einem Hardwaredecoder (HW), der Darstellungsvorrichtung ein Transportstrom (TS) als Eingangssignal in Form eines digitalen Rundfunkempfangssignals dient, wobei der Transportstrom (TS) aus mindestens zwei Programminhalten (P1, P2, P3, P4) besteht, der Demultiplexer (Demux) den Transportstrom (TS) in die in diesem enthaltenden Programminhalte (P1, P2, P3, P4) demultiplext, wobei die Programminhalte (P1, P2, P3, P4) codierte Bilder (I, P, B) enthalten,
**dadurch gekennzeichnet, dass**
der Demultiplexer (Demux) die degemultiplexten Programminhalte (P1, P2, P3, P4) in den Speicher (S) speichert, die Mikrocomputereinheit (µC) den ausgewählten Programminhalt (P1) einem Hardwaredecoder (HW) zuleitet, welcher diese Daten decodiert und der Video-Engine (V) zur Darstellung auf der Anzeigevorrichtung (Disp) übergibt, die Mikrocomputereinheit (µC) den Speicher (S) nach bestimmten codierten Bildern (I), welche nicht dem ausgewählten Programminhalt (P1) zugehören, durchsucht, diese bestimmten codierten Bilder (I) decodiert und der Video-Engine (V) zur Darstellung übergibt.

11. Darstellungsvorrichtung (D) nach einem der Ansprüche 9 oder 10,
**dadurch gekennzeichnet, dass**
die codierten Bilder (I, P, B) unterschiedlich komprimiert sind.

12. Darstellungsvorrichtung (D) nach einem der Ansprüche 9 bis 11,
**dadurch gekennzeichnet, dass**
die codierten Bilder (I, P, B) unterschiedliche Kompressionsraten aufweisen.

13. Darstellungsvorrichtung (D) nach einem der Ansprüche 9 bis 12,
**dadurch gekennzeichnet, dass**
die codierten Bilder (I, P, B) in Gruppen (GoP) zusammengefasst sind.

14. Darstellungsvorrichtung (D) nach einem der Ansprüche 9 bis 13,
**dadurch gekennzeichnet, dass**
die codierten Bilder (I, P, B) MPEG-codiert sind und I-Frames (I), P-Frames (P) und B-Frames (B) aufweisen, welche zu Gruppen (GoP) zusammengefasst sind.

15. Darstellungsvorrichtung (D) nach einem der Ansprüche 9 bis 14,
**dadurch gekennzeichnet, dass**
die bestimmten codierten Bilder (I) I-Frames sind und die Mikrocomputereinheit (µC) diese mittels einer auf der Mikrocomputereinheit (µC) implementierten Softwareroutine decodiert.

16. Darstellungsvorrichtung (D) nach einem der Ansprüche 9 bis 15,
**dadurch gekennzeichnet, dass**
die Video-Engine die bestimmten von der Mikrocomputereinheit (µC) codierten Bilder (I) in einem Nebenbild oder als Bild-im-Bild auf der Anzeigevorrichtung (Disp) dargestellt.

17. Darstellungsvorrichtung (D) nach einem der Ansprüche 9 bis 16,
**dadurch gekennzeichnet, dass**
der Hardwaredecoder (HW) von der Mikrocomputereinheit (µC) die Startadresse im Speicher (S) übergeben erhält, ab welcher er die zu decodierenden Programminhalte (P1) im Speicher liegen.

18. Darstellungsvorrichtung (D) nach einem der Ansprüche 9 bis 17,
**dadurch gekennzeichnet, dass**
der Speicher (S) ein FIFO Speicher ist.
